# EUROPÄISCHE PATENTANMELDUNG

(11) **EP 1 153 965 A1**
(43) Veröffentlichungstag der Anmeldung: **14.11.2001**
(21) Anmeldenummer: 01250101.1
(22) Anmeldetag: 21.03.2001
(51) Int. Cl.: C08J 7/12, B29C 49/46, B60K 15/03

(54) **Verfahren zur Herstellung von Kunststofferzeugnissen mit verringerter Durchlässigkeit für unpolare Stoffe**

(30) Priorität: 12.05.2000 DE 10024172
(71) Anmelder: Volkswagen AG, 38436 Wolfsburg (DE)
(72) Erfinder: Schöne, Claudia, 65779 Kelkheim/i.T. (DE); Radon, Uwe, 38442 Wolfsburg (DE); Gabbert, Heiko, 49377 Vechta (DE)
(74) Vertreter: Schneider, Henry, Dipl.-Ing.

(57) **Zusammenfassung**

Die Erfindung betrifft ein Kunststofferzeugnis mit verringerter Durchlässigkeit für unpolare Stoffe sowie ein Verfahren zu dessen Herstellung.

Es ist vorgesehen, dass eine Oberfläche des Kunststofferzeugnisses zumindest in einem Kontaktbereich mit dem unpolaren Stoff eine sauerstoffhaltige Diffusions-Sperrschicht, die durch Behandlung mit ozonhaltigem Gas erzeugt wird, aufweist.

## Beschreibung

Die Erfindung betrifft ein Kunststofferzeugnis mit verringerter Durchlässigkeit für unpolare Stoffe und ein Verfahren zur Herstellung derartiger Kunststofferzeugnisse.

Um die Durchlässigkeit (Permeabilität) von Kunststofferzeugnissen für Gase oder Flüssigkeiten zu verringern, sind verschiedene Nachbehandlungsverfahren bekannt. Die Kunststofferzeugnisse werden im Allgemeinen als Dichtmaterial oder - wenn als Behältnis ausgeformt (zum Beispiel Kraftstofftank) - zur Lagerung unpolarer Stoffe verwendet. Ein Verfahren, das sich zur Erzeugung einer Diffusions-Sperrschicht in Kraftstofftanks für Kraftfahrzeuge durchgesetzt hat, ist die Fluorierung. Dafür wird eine innere Oberfläche des zumeist auf Basis eines Polyolefins hergestellten Kraftstofftanks mit einem fluorhaltigen Gas in Kontakt gebracht. Dabei werden Wasserstoffatome aus der Polyolefinkette statistisch durch Fluor substituiert. Dies führt zu einer erhöhten Polarität und zu einer Hydrophilierung der Oberfläche. Die Neigung hydrophober Kraftstoffe zur Adsorption und Sorption durch die Oberfläche wird herabgesetzt.

Auf einem ähnlichen Prinzip beruhen Sulfonierungsverfahren. Hier werden polare SO-Funktionalitäten in der zu behandelnden Oberfläche eingebunden. Ferner lassen sich lipophobe Schichten durch Plasmapolymerisation aufbringen. Bei der Plasmapolymerisation wird ein geeignetes Monomer in einem Niederdruckplasma angeregt und auf der zu behandelnden Kunststoffoberfläche abgeschieden. Durch geeignete Wahl des Monomers können auf diese Weise demnach hydrophile Diffusions-Sperrschichten erzeugt werden. Die Plasmapolymerisation als auch die Sulfonierung sind mit einem hohen Prozessaufwand und hohen Kosten verbunden. Außerdem liefern sie bei komplexen Oberflächengestaltungen oder in Hohlkörpern teilweise unbefriedigende Ergebnisse. Die durch Fluorierung oder Sulfonierung erbrachte Sperrwirkung ist häufig ungenügend.

Der Erfindung liegt daher die Aufgabe zugrunde, ein Verfahren zur Verringerung einer Durchlässigkeit von Kunststoffen bereit zu stellen, das eine hohe Sperrwirkung bei geringem Prozessaufwand erbringt. Durch das Verfahren entsprechend modifizierte Kunststofferzeugnisse sollen mit hoher Qualität bereit gestellt werden.

Diese Aufgabe wird durch ein Verfahren mit den im Anspruch 1 genannten Merkmalen sowie ein Kunststofferzeugnis mit den Merkmalen des Anspruchs 13 gelöst. Erfindungsgemäß ist nach dem Verfahren vorgesehen, dass eine Oberfläche des Kunststofferzeugnisses zumindest in einem Kontaktbereich mit dem unpolaren Stoff mit einem ozonhaltigen Gas beaufschlagt wird. Es wurde nämlich überraschend gefunden, dass eine Permeabilität des Kunststofferzeugnisses, beispielsweise eines Behälters, gegenüber unpolaren Stoffen nach Kontakt seiner Oberfläche mit Ozon stark herabgesetzt ist. Dabei kann ein flächiges Kunststofferzeugnis ein- oder beidseitig mit Ozon behandelt werden.

Das Kunststofferzeugnis zeichnet sich dadurch aus, dass eine Oberfläche des Kunststofferzeugnisses zumindest im Kontaktbereich mit dem unpolaren Stoff eine sauerstoffhaltige Diffusions-Sperrschicht, die durch Behandlung mit ozonhaltigem Gas erzeugt wird, aufweist. Das Kunststofferzeugnis ist dabei vorzugsweise ein Behälter, insbesondere ein Kraftstofftank. Der Tank muss lediglich an seiner inneren Oberfläche mit der Diffusions-Sperrschicht versehen werden. Die Behandlung lässt sich verfahrenstechnisch besonders günstig an alkyl-, alkenyl- und alkinylhaltigen Polymeren (zum Beispiel Polyolefinen) durchführen.

Das Verfahren eignet sich insbesondere zur Herabsetzung der Durchlässigkeit gegenüber unpolaren Gasen und/oder unpolaren Flüssigkeiten, insbesondere kohlenwasserstoffhaltiger Kraftstoffe. Daher lässt sich das Verfahren besonders vorteilhaft im Kraftfahrzeugbau bei der Fertigung von Kraftstofftanks aus Kunststoffen anwenden.

Ein Vorteil des erfindungsgemäßen Verfahrens ist die leichte Darstellbarkeit von Ozon. Nach einer bevorzugten Ausgestaltung wird das ozonhaltige Gas aus einem sauerstoffhaltigen Gas mit einem Ozongenerator erzeugt. Dabei wird in bekannter Weise durch Anlegen einer niederfrequenten Spannung an eine von dem sauerstoffhaltigen Gas durchströmten Ozonisatorröhre Ozon gebildet. Nach einer abweichenden Ausgestaltung wird das ozonhaltige Gas durch Bestrahlung des sauerstoffhaltigen Gases mit UV-Strahlung dargestellt. Die Wellenlänge der UV-Strahlung liegt unter 370 nm. Bekannte und geeignete UV-Quellen sind Quecksilberröhren oder UV-Laser. Als sauerstoffhaltiges Gas kann entweder Luft oder reiner Sauerstoff eingesetzt werden. Letztere Variante gestattet die Darstellung höherer Ozonkonzentrationen. Ein Vorteil der Erfindung, beispielsweise gegenüber der Fluorierung, ist darin zu sehen, dass das Ausgangsmaterial zur Erzeugung der Sperrschicht kostengünstiger verfügbar ist. Zudem kann das Reaktionsgas nach Behandlung in einfacher Weise aufgereinigt werden, so dass nahezu keine umweltrelevanten Abfälle entstehen.

Nach einer bevorzugten Ausgestaltung des Verfahrens werden die Behandlungsparameter wie Druck, Dauer, Ozongehalt, Temperatur und Verfahrensführung in Abhängigkeit von den am Kunststofferzeugnis verwendeten Polymeren gewählt. Auf diese Weise kann die Oberflächenbehandlung sehr genau den jeweils notwendigen Erfordernissen angepasst werden.

Ein Gehalt von Ozon in dem ozonhaltigen Gas kann 0,0001 bis 20 %, insbesondere 1 bis 10 %, betragen. Der Ozongehalt hängt von der Sauerstoffquelle (Luft oder reiner Sauerstoff) sowie von dem Darstellungsverfahren für Ozon ab. Grundsätzlich lassen sich in dem Ozongenerator höhere Ozonkonzentrationen darstellen. Die Dauer der Beaufschlagung der Kunststoffoberfläche mit dem ozonhaltigen Gas kann zwischen 0,1 s und 60 min, insbesondere 10 s bis 5 min, betragen. Selbstverständlich sind bei der Wahl der Behandlungsdauer auch die anderen Behandlungsparameter zu berücksichtigen.

Nach einer besonders vorteilhaften Ausgestaltung wird der zu behandelnde Kunststoffhohlkörper in dem an sich bekannten Blasformverfahren hergestellt. Eine innere Oberfläche des Kunststoffhohlkörpers wird bereits in dem Blaswerkzeug während und/oder nach dem Blasvorgang mit dem ozonhaltigen Gas beaufschlagt. Der Gasdruck des ozonhaltigen Gases kann 1 bis 15 bar, insbesondere 1 bis 5 bar, betragen und die Gastemperatur kann bei -20 bis 200 °C, insbesondere 20 bis 120 °C, liegen.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnung näher erläutert.

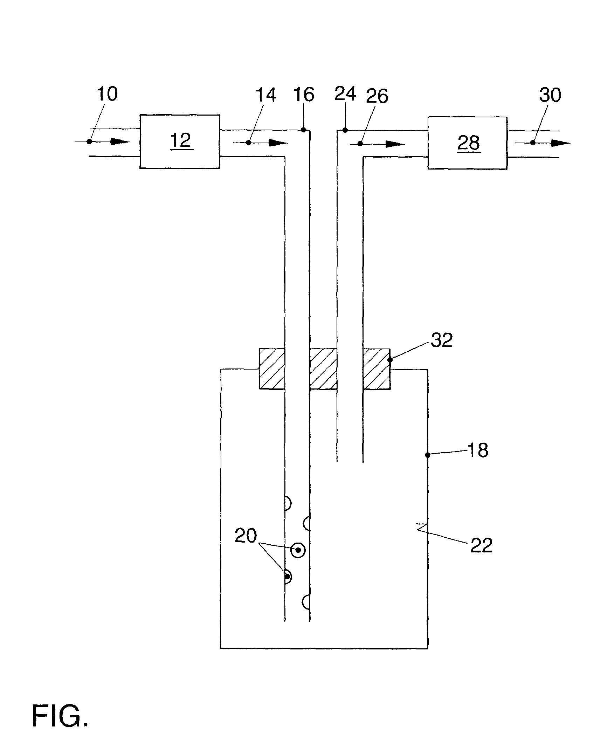

Die einzige Figur zeigt schematisch eine Anordnung zur Durchführung des Verfahrens. Ein Sauerstoffstrom 10 wird einem Ozongenerator 12 zugeführt. In einer nicht dargestellten Ozonisatorröhre des Ozongenerators 12 wird ein Teil des Sauerstoffes zu Ozon umgesetzt. Das entstehende Gasgemisch 14 aus Ozon und Sauerstoff wird über eine erste Gasleitung 16 in den Innenraum eines Kunststoff-Kraftstoff-Tanks 18 geleitet. Zur besseren Verteilung des Ozon/Sauerstoff-Stromes 14 weist die Gasleitung 16 zahlreiche Austrittsöffnungen 20 im Bereich des Innenraums auf. Je nach Komplexität der Form des Kunststoff-Kraftstoff-Tanks 18 kann es vorteilhaft sein, speziell gestaltete und/oder mehrere Gasleitungen und/oder besonders ausgeführte Austrittsöffnungen 20 zu verwenden.

Das reaktionsfreudige Ozon reagiert nun mit einer Oberfläche 22 des Innenraums des Kunststoff-Kraftstoff-Tanks 18 - teils unter Ausbildung von Hydroxylgruppen (-OH). Im Ergebnis wird die Durchlässigkeit des Kunststoff-Kraftstoff-Tanks 18 gegenüber unpolaren Stoffen, insbesondere kohlenwasserstoffhaltigen Kraftstoffen, sehr stark reduziert. Die Behandlungsparameter, wie Druck, Dauer, Ozongehalt, Temperatur und Verfahrensführung, sind in Abhängigkeit von dem zu behandelnden Polymer des Kunststoff-Kraftstoff-Tanks 18 zu wählen.

Über eine zweite Gasleitung 24 wird ein Abgasstrom 26, der einen Restozongehalt enthält, einem Ozonvernichter 28 zugeführt. Im Ozonvernichter 28 wird das Restozon katalytisch zersetzt oder mit einem geeigneten Reaktionspartner umgesetzt. Für letztere Vorgehensweise eignen sich beispielsweise Aktivkohlefilter. Eine von dem Ozonvernichter 28 ins Freie gelassene Abluft 30 enthält somit kein Ozon mehr und ist damit im Gegensatz zu anderen Verfahren ökologisch vollkommen unbedenklich. Durch Verwendung eines Dichtelementes 32, durch welches die Gasleitungen 16, 24 in den Innenraum des Kunststoff-Kraftstoff-Tanks 18 ragen, wird zusätzlich der Austritt von ozonhaltigem Gas in die Umwelt verhindert.

Grundsätzlich kann die Ozonisierung im Blaswerkzeug während oder nach dem Blasformen des Kunststoff-Kraftstoff-Tanks statistisch oder kontinuierlich durchgeführt werden (Verfahrensführung). Bei der statistischen Behandlung wird das ozonhaltige Gas 14 dem Kunststoff-Kraftstoff-Tank 18 durch den Blasdorn zugeführt und durch diesen nach einer vorgegebenen Behandlungsdauer wieder abgesaugt. Die Zuführung des ozonhaltigen Gases 14 kann wahlweise auch über die Blasnadel erfolgen. Dagegen wird für die kontinuierliche Behandlung ein konstanter Gasmassenstrom in den Gasleitungen 16 und 24 aufrecht erhalten, so dass der Kunststoff-Kraftstoff-Tank 18 kontinuierlich von dem ozonhaltigen Gasgemisch 14 durchströmt wird. Die Einleitung des Gasgemisches geschieht dabei über den Blasdorn. Die Ableitung erfolgt über die Blasnadel. Dabei kann der Ort der Ein- und Ausleitung variieren.

### BEZUGSZEICHENLISTE

- 10: Sauerstoffstrom
- 12: Ozongenerator
- 14: ozonhaltiges Gasgemisch
- 16: Gasleitung, erste
- 18: Kunststoff-Kraftstoff-Tank
- 20: Austrittsöffnungen
- 22: Oberfläche
- 24: Gasleitung, zweite
- 26: Abgasstrom
- 28: Ozonvernichter
- 30: Abluft
- 32: Dichtelement

## Patentansprüche

1. Verfahren zur Verringerung einer Durchlässigkeit von Kunststofferzeugnissen für einen unpolaren Stoff, **dadurch gekennzeichnet, dass** eine Oberfläche des Kunststofferzeugnisses zumindest in einem Kontaktbereich mit dem unpolaren Stoff mit einem ozonhaltigen Gas beaufschlagt wird.

2. Verfahren nach Anspruch 1, **dadurch gekennzeichnet, dass** die Durchlässigkeit für unpolare Stoffe, wie Gase und/oder Flüssigkeiten, insbesondere Kraftstoffe, verringert wird.

3. Verfahren nach einem der Ansprüche 1 oder 2, **dadurch gekennzeichnet, dass** das ozonhaltige Gas aus einem sauerstoffhaltigen Gas mit einem Ozongenerator erzeugt wird.

4. Verfahren nach einem der Ansprüche 1 oder 2, **dadurch gekennzeichnet, dass** das ozonhaltige Gas aus einem sauerstoffhaltigen Gas durch UV-Bestrahlung erzeugt wird.

5. Verfahren nach einem der vorhergehenden Ansprüche, **dadurch gekennzeichnet, dass** ein Ozongehalt in dem Gas 0,0001 bis 20 %, insbesondere 1 bis 10 %, beträgt.

6. Verfahren nach einem der vorhergehenden Ansprüche, **dadurch gekennzeichnet, dass** die Dauer der Beaufschlagung mit dem ozonhaltigem Gas 0,1 s bis 60 min, insbesondere 10 s bis 5 min, beträgt.

7. Verfahren nach einem der vorhergehenden Ansprüche, **dadurch gekennzeichnet, dass** das Kunststofferzeugnis ein Kunststoffhohlkörper, insbesondere ein Kraftstofftank, ist.

8. Verfahren nach Anspruch 7, **dadurch gekennzeichnet, dass** der Kunststoffhohlkörper in einem Blasformverfahren hergestellt wird und die Beaufschlagung einer inneren Oberfläche des Kunststoffhohlkörpers mit dem ozonhaltigen Gas in einem Blaswerkzeug während und/oder nach dem Blasvorgang erfolgt.

9. Verfahren nach einem der vorhergehenden Ansprüche, **dadurch gekennzeichnet, dass** die Beaufschlagung mit dem ozonhaltigen Gas bei einem Gasdruck von 1 bis 15 bar, erfolgt.

10. Verfahren nach einem der vorhergehenden Ansprüche, **dadurch gekennzeichnet, dass** die Beaufschlagung mit dem ozonhaltigen Gas bei einer Gastemperatur von -20 bis 200 °C, insbesondere 20 bis 120 °C, erfolgt.

11. Verfahren nach einem der vorhergehenden Ansprüche, **dadurch gekennzeichnet, dass** die Beaufschlagung des Kunststofferzeugnisses mit dem ozonhaltigen Gas kontinuierlich oder statisch erfolgt (Verfahrensführung).

12. Verfahren nach einem der vorhergehenden Ansprüche, **dadurch gekennzeichnet, dass** die Behandlungsparameter, wie Druck, Dauer, Ozongehalt, Temperatur und Verfahrensführung, in Abhängigkeit von den am Kunststofferzeugnis verwendeten Polymeren gewählt werden.

13. Kunststofferzeugnis mit verringerter Durchlässigkeit für unpolare Stoffe, **dadurch gekennzeichnet, dass** eine Oberfläche des Kunststofferzeugnisses zumindest in einem Kontaktbereich mit dem unpolaren Stoff eine sauerstoffhaltige Diffusions-Sperrschicht, die durch Behandlung mit ozonhaltigem Gas erzeugt wird, aufweist.

14. Kunststofferzeugnis nach Anspruch 13, **dadurch gekennzeichnet, dass** das Kunststofferzeugnis ein Behälter, insbesondere ein Kraftstofftank, ist.

15. Kunststofferzeugnis nach Anspruch 14, **dadurch gekennzeichnet, dass** lediglich eine innere Oberfläche des Kraftstofftanks mit der Diffusions-Sperrschicht versehen ist.

16. Kunststofferzeugnis nach einem der Ansprüche 13 bis 15, **dadurch gekennzeichnet, dass** das Kunststofferzeugnis aus alkyl-, alkenyl- und/oder alkinylhaltigen Polymeren besteht.
